# EUROPEAN PATENT APPLICATION

(11) **EP 4 797 681 A1**
(43) Date of publication of application: **26.08.2026**
(21) Application number: 25158767.1
(22) Date of filing: 19.02.2025
(51) Int. Cl.: H04N 13/337, H04N 13/305, H04N 13/366

(54) **A DEVICE FOR GENERATING AN IMAGE FOR A STEREO DISPLAY AND METHOD THEREFOR**

(71) Applicant: Leica Instruments (Singapore) Pte Ltd., Singapore 618299 (SG)
(72) Inventor: YANG, Gao, 618299 Singapore (SG); THEMELIS, George, 618299 Singapore (SG)
(74) Representative: Paustian & Partner Patentanwälte mbB

(57) **Abstract**

A first aspect of the present disclosure is related to a device for generating an image for a polarized stereo display,
configured to:
- obtain of a sample a plurality of stereo images from an image acquisition device, wherein a stereo image comprises a left image and a right image as stereo information; and
- determine a signal, L-signal, for a left image channel, L-channel, of a stereo display;
- determine a signal, R-signal, for a right image channel, R-channel, of the stereo display;
- determine a compensation signal, L-compensation, for the L-channel of the stereo display based on the R-signal;
- determine a compensation signal, R-compensation, for the R-channel of the stereo display based on the L-signal;
- provide the L-signal, the L-compensation, the R-signal, and the R-compensation for display on the stereo display.

## Description

### Technical Field

This disclosure is related to devices for generating image for a stereo display and methods therefor.

### Background

Digital heads-up surgeries can rely on stereoscopic video systems, involving screens and sometimes glasses, to provide immersive 3D visualization. However, these systems often suffer from crosstalk, where a faint ghost image from the right eye's perspective appears in the left eye's view, and vice versa. Though usually minimal, this overlap can be distracting, particularly with bright features like specular highlights. Crosstalk draws attention away from vital details, potentially impacting surgical accuracy. Improvements are desirable.

### Summary

An object of the present disclosure is to improve a display of 3D images.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for generating an image for a stereo display,
*configured to:*
- *obtain of a sample a plurality of stereo images from an image acquisition device, wherein a stereo image comprises a left image and* a *right image* as *stereo information; and*
- *determine a signal, L-signal, for a left image channel, L-channel, of a stereo display;*
- *determine a signal, R-signal, for a right image channel, R-channel, of the stereo display;*
- *determine a compensation signal, L-compensation, for the L-channel of the stereo display based on the R-signal;*
- *determine a compensation signal, R-compensation, for the R-channel of the stereo display based on the L-signal;*
- *provide the L-signal, the L-compensation, the R-signal, and the R-compensation for display on the stereo display.*

A stereo display is a display technology used to create three-dimensional (3D) visual experiences by separating a left and a right view on a single viewing device. Two distinct images are projected and/or displayed simultaneously. For example, with polarized stereo displays, the two images are separated by unique polarization orientation, and users view such images, e.g. with polarized glasses, typically comprising lenses that only allow a specific polarization orientation to pass for each eye. Consequently, each eye perceives a different image, creating a stereoscopic effect that gives a sense of depth.

An image acquisition device for image acquisition can be a medical or diagnostical imaging device, e.g., a microscope, an endoscope, an exoscope, or it can be a device that is configured to exchange information with an imaging device. If the device exchanges information with an image acquisition device, the device can be a network device and in particular be in communication with a plurality of imaging devices. It can be a separate device.

A signal for a left image channel (L-signal) and/or a signal for a right image channel (R-signal) may be an image or it may be a part of an image, such as pixels along a horizontal or vertical line of the image or of a line-alternating stereo display, such as a polarized stereo display.

A compensation signal is a signal which is generated in order to cancel out crosstalk. Crosstalk is related to a ghost image of one of the two channels of the stereo display in the respective other of the two channels. A compensation signal may be determined as a downscaled version of a channel's main signal. This compensation signal can then be used to cancel out the crosstalk in the other channel, e.g. by subtracting the compensation signal from the main signal in this channel.

Additionally to cancelling out the crosstalk, a compensation signal may be configured to condition the main signal in order that crosstalk can be cancelled out. Therefore, the compensation signal may comprise, additionally to a part which is directly related to a crosstalk compensation, a part by which one or more values of the main signal are increased in intensity/brightness. This will be explained in more detail later.

A provision of information, such as the L-signal, the L-compensation, the R-signal, the R-compensation in the sense of this disclosure can comprise sending the information and/or storing the information for others to fetch, e.g. storing the information in a shared memory.

Embodiments of the first aspect provide signals for both channels of a polarized stereo display, which are less disturbed by crosstalk.

An embodiment of the first aspect is related to a device for generating an image for a stereo display,
*configured to:*
- *add the L-signal and the L-compensation to a combined L-channel-signal ;*
- *add the R-signal and the R-compensation to a combined R-channel-signal; and*
*wherein the L-signal and the L-compensation are provided* as *the combined L-channel-signal for display on the stereo display; and wherein the R-signal, and the R-compensation are provided* as *the combined R-channel-signal for display on the stereo display.*

In this case, the L-compensation and/or the R-compensation may be inverted (i.e. multiplied by -1) such that the provision of the combined L-channel-signal is suited to cancel out the crosstalk from the right channel and such that the provision of the combined R-channel-signal is suited to cancel out the crosstalk from the left channel.

An embodiment of the first aspect is related to a device for generating an image for a stereo display,
*wherein the L-compensation is determined* as a *negative expected crosstalk of the R-signal;*
   *and*/*or*
*wherein the R-compensation is determined* as a *negative expected crosstalk of the L-signal.*

Crosstalk of the R-signal means a crosstalk caused by the R-signal to the L-channel. Additionally, crosstalk of the L-signal means a crosstalk caused by the L-signal to the R-channel.

An embodiment of the first aspect is related to a device for generating an image for a stereo display,
*wherein the L-compensation is based on a linear scaling of the R-signal; and*/*or*
*wherein the R-compensation is based on a linear scaling of the L-signal.*

In other words, crosstalk of the R-signal (i.e. crosstalk caused by the R-signal to the L-channel) can be determined as a linearly scaled R-signal. And crosstalk of the L-signal (i.e. crosstalk caused by the L-signal to the R-channel) can be determined as a linearly scaled model of the L-signal. The linear scaling may be between 1 and 10%, in particular 3%, 5%, 7% and/or 9%.

An embodiment of the first aspect is related to a device for generating an image for a stereo display, *wherein the L-signal, the L-compensation, the R-signal, and the R-compensation comprise several channels that depend on the number of channels of a color model, in particular the RGB-color-model.*

A compensation can be estimated by calibrating the relationship between signal and crosstalk. Images of known pixel values can be fed to the display devices, and the crosstalk can be measured in red, green, and blue color channels using a calibrated camera or light meter. This can be repeated for multiple pixel values to cover all possible signals. The result can be stored in look up-tables and/or modelled by polynomials. As a result, different compensation models can be determined for the red, green, and blue channels of an image. Because the amount of crosstalk can be different for different color channels, hence different coefficients can be used. For each of these color channels, a compensation can then be determined separately on the basis of a compensation model based on an actual signal.

An embodiment of the first aspect is related to a device for generating an image for a stereo display,
*configured to:*
- *determine if the L-signal has one or more elements that are smaller than respective elements of an estimated crosstalk for the L-channel;*
- *if confirmed, add to all elements of the L-signal or of the L-compensation a first constant amount;*
   *and*/*or*
- *determine if the R-signal has one or more elements that are smaller than respective elements of an estimated crosstalk for the R-channel;*
- *if confirmed, add to all elements of the R-signal or of the R-compensation a second constant amount.*

Adding a constant amount means adding the same amount to each element of the respective main signal (L-signal, R-signal) or compensation signal (but not to both).

In case an L-signal (or an R-signal) has one or more elements (e.g. pixels along a horizontal line) that have a smaller intensity than the estimated crosstalk at these elements, then subtracting a compensation (or adding an inverted compensation) will lead to negative values at these elements. As negative values will not be realized by the display, the crosstalk will remain visible at these elements. Hence, in order to assure that an L-signal (or an R-signal) are always larger than an estimated crosstalk, a constant amount is added to the intensity of the whole signal (L-signal, R-signal), i.e. to the intensity of all elements of the signal. The determined compensation (L-compensation, R-compensation) will then be subtracted from the raised signal.

It is to be noted that the addition of the constant amount can be done alternatively also to the compensation signal instead of the main signal.

A compensation for this embodiment may be determined in multiple steps: In a first step, a model of the crosstalk is determined that is to be subtracted from the main signal. In a second step, the main signal is raised by a constant amount such that no elements/pixel exist where the crosstalk is larger than the main signal. In a third step, the adapted/raised main signal subtracted by the model of the crosstalk is provided to the respective, crosstalk-afflicted channel.

An embodiment of the first aspect is related to a device for generating an image for a stereo display,
w *herein the first constant amount equals or exceeds the amount of the largest negative difference between the L-signal and the estimated crosstalk for the L-channel; and*/*or*
w *herein the second constant amount equals or exceeds the amount of the largest negative difference between the R-signal and the estimated crosstalk for the R-channel.*

A negative difference can be obtained for the elements of a main signal (L-signal, R-signal) for which the signal value is smaller than the signal value of the estimated crosstalk. Because then, subtracting the estimated crosstalk from the main signal (L-signal, R-signal) leads to a negative result (i.e. a negative difference).

Relating the constant amount by which the main signal (L-signal, R-signal) is raised to the largest negative difference, assures that the constant amount added (to an L-signal or to an R-signal) is sufficient to avoid negative signal values if an estimated crosstalk compensation is subtracted from a respective main signal. In general, the constant amount added may at least equal the largest difference. But it may also be larger. However, the larger the constant amount is defined, the brighter the overall image. This may lead to a reduced contrast.

An embodiment of the first aspect is related to a device for generating an image for a stereo display,
*wherein the first constant amount equals the largest amount of an estimated crosstalk for the L-channel; and*/*or*
*wherein the second constant amount equals the largest amount of an estimated crosstalk for the R-channel;*

By using the largest estimated amount of crosstalk for the constant amount by which a main signal or a compensation signal is shifted, it can be assured that there is always enough floor to subtract from, in case the main signal is weaker than the crosstalk.

An embodiment of the first aspect is related to a device for generating an image for a stereo display,
*configured to:*
- *determine if the L-signal has one or more elements that are smaller than respective elements of an estimated crosstalk for the L-channel;*
- *if confirmed, add* a *first non-constant amount to the L-signal of to the L-compensation such that the amount is increasing the closer the L-signal elements are to the elements where the crosstalk is larger than the L-signal elements;*
   *and*/*or*
- *determine if the L-signal has one or more elements that are smaller than respective elements of an estimated crosstalk for the L-channel;*
- *if confirmed, add* a *second non-constant amount to the R-signal or to the R-compensation such that the amount is increasing the closer the R-signal elements are to the elements where the crosstalk is larger than the L-signal elements.*

These embodiments have the advantage that not the whole main signal (L-signal and/or R-signal) is raised to avoid negative values in a compensated signal as in the preceding embodiments with constant raise. Here, the main signal is only raised in a vicinity of a crosstalk, when it would otherwise lead to negative values in a compensated signal. The farther the elements of a main signal (L-signal, R-signal) are distanced to the elements of this crosstalk, the less they are raised, i.e. the more the adapted main signal remains the original signal. The slope of the raise may be modulated. For example, the slope can be adjusted such that all elements of the main signal are amended. Alternatively, the slope can be adjusted to be steeper such that the elements of a main signal at a pre-defined distance to the crosstalk are not amended.

An embodiment of the first aspect is related to a device for generating an image for a stereo display,
*wherein the first non-constant amount resembles an essentially smooth function that has* a *maximum value at the element with the largest negative difference between the L-signal and the expected crosstalk; and*/*or*
*wherein the second non-constant amount resembles an essentially smooth function that has* a *maximum value at the element with the largest negative difference between the R-signal and the expected crosstalk.*

A smooth function in pure mathematical terms relates to a function for which at all points all derivatives exist and are continuous. An "essentially smooth" function is related to this concept but comprises discrete function and functions that comprise one or more discontinuities, which only insignificantly determine the overall form of the function. Such functions can comprise a raised cosine pulse, a Gaussian pulse, and/or functions that are similar to these waveforms.

An embodiment of the first aspect is related to a device for generating an image for a stereo display,
*configured to:*
- *obtain a viewing position of a user;*
- *determine based on the obtained viewing position one or more of:*
   -- *the L-signal,*
   -- *the R-signal,*
   -- *the L-compensation,*
   -- *the R-compensation.*

A viewing position of a user can be obtained, e.g. by a camera, which may be attached to the display, and which is configured to track the head and/or the eyes of a user. Based on this information, a gaze angle can be determined, with which the user looks at the display. This gaze angle can be used to modulate the determination of the compensation (L-compensation, R-compensation), i.e. of the model of the cross talk. Additionally or alternatively, the gaze angle may be used to modulate amendments of the main signal (L-signal, R-signal) such that an even better overall compensation of the crosstalk can be achieved. For example, with a lenticular autostereoscopic display, based on the viewer eye positions, the subpixel view assignment can be determined, and the corresponding crosstalk can also be estimated at the subpixel level. The compensation factor can then be computed using this estimated crosstalk on a subpixel basis and applied to reduce the crosstalk effect.

An embodiment of the first aspect is related to a device for generating an image for a stereo display,
*wherein the signals and the compensations are related to a horizontal line for a pre-defined vertical position of the polarized display; and configured to:*
   - *determine based on the vertical position one or both of:*
      -- *the L-compensation,*
      -- *the R-compensation.*

The vertical value determines the height of the horizontal line at the display.

In one embodiment the vertical values of the display are categorized in three groups: in the top of the screen, in the middle of the screen, and in the bottom (of the display). In case the vertical value of a horizontal line indicated that the horizontal line is in the top or bottom of the screen, the compensation (L-compensation, R-compensation) may be determined as a downscaled version of the respective main signal with a scaling factor of 0,05.

Additionally or alternatively, in case the vertical value of a horizontal line indicates that the horizontal line is in the middle of the screen, the compensation (L-compensation, R-compensation) may be determined as a downscaled version of the respective main signal with a scaling factor of 0,03. Other dependencies are possible.

A second aspect of the present disclosure is related to a method for generating an image for a stereo display,
*comprising the steps:*
- *obtaining of a sample a plurality of stereo images from a stereo imaging system, wherein a stereo image comprises a left image and* a *right image* as *stereo information; and*
- *determining a signal, L-signal, for a left image channel, L-channel, of a stereo display;*
- *determining a signal, R-signal, for a right image channel, R-channel, of the stereo display;*
- *determining a compensation signal, L-compensation, for the L-channel of the stereo display based on the R-signal;*
- *determining a compensation signal, R-compensation, for the R-channel of the stereo display based on the L-signal;*
- *providing the L-signal, the L-compensation, the R-signal, and the R-compensation for display on the stereo display.*

A method according to the second aspect can comprise one or more steps to execute one or more functions of a device according to the first aspect of this disclosure. Steps or substeps of a method according to the second aspect of this disclosure can be configured such that they relate to features of a device according to the first aspect of this disclosure.

A third aspect of the present disclosure is related to a computer program with program code,
*for performing the method according to the preceding aspect when the computer program is run on a processor.*

A further aspect of the present disclosure is related to a computing device comprising a processor configured to carry out the method according to any one of preceding aspects/embodiments.

A further aspect of the present disclosure is related to a computer-readable medium comprising instructions which, when executed by a computer system, cause the computer system to carry out the method according to any one of the preceding aspects/embodiments.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 shows signals in relation to a device for generating an image for a stereo display according to an embodiment of this disclosure
Fig. 2 shows a flow chart of a method for generating images for each channel for a stereo display according to an embodiment of this disclosure.
Fig. 3 shows a compensation strategy of a device for generating an image for a stereo display according to an embodiment of this disclosure.
Fig. 4 shows a compensation strategy of a device for generating an image for a stereo display according to an embodiment of this disclosure.
Fig. 5 shows a microscope system according to or for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure, and which illustrate specific aspects in which the present disclosure can be understood. Identical reference signs refer to identical or at least functionally or structurally similar features.

### Detailed description

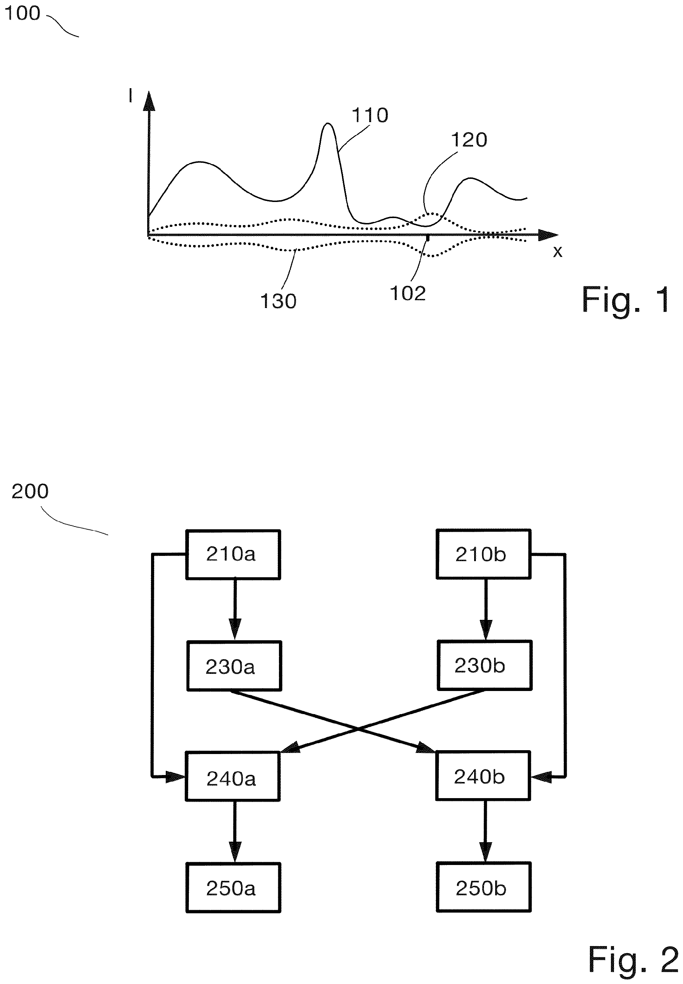

Fig. 1 shows signals in relation to a device for generating an image for a stereo display according to an embodiment of this disclosure. The depicted signals are related to a channel of the stereo display. Such a display has two channels, one for a user's right eye of and one for the left eye. In case of a circular polarization display the two signals/channels are generated, e.g. by a linear polarizer and a quarter-wave plate. Thereby, the left eye image is, e.g., clockwise polarized and the right eye image is counterclockwise polarized. In such a structure or in similar structures there may be an imperfect separation between the two channels. Hence, in each channel there may be a part of the signal from the other channel, i.e. crosstalk. This results in a ghost image of the left channel in the right channel and vice versa.

A horizontal pixel brightness profile is illustrated in Fig. 1. The x-axis represents the pixels x along a horizontal line along an image of a single channel (i.e. the x-axis of a polarized display). The y-axis represents the brightness or intensity I. The signal 110 represents a left channel or right channel signal, i.e. the main signal of a channel. The signal 120 represents a crosstalk signal from the respective other channel. Often, the crosstalk signal is weaker than the main signal. Then the effect of the crosstalk may remain small or even invisible, for pixels in which the crosstalk remains smaller than the main signal. However, it may happen that the main signal is weak, and crosstalk signal exceeds the main signal, such as for the x-value 102. Such a constellation can create a sport at the display that can be disturbing for a user.

In order to reduce the effect of crosstalk for a stereo display, a model of the crosstalk 130 (also called "compensation signal" herein) is subtracted from the main signal. Hence, a model of the crosstalk from the right side is subtracted from the overall signal of the left side and a model of the crosstalk from the left side is subtracted from the overall signal of the right side. A model of a crosstalk can, e.g. be a downscaled version of the main signal of the channel from which the crosstalk originates.

Fig. 2 shows a flow chart 200 of a method for generating images for each channel for a stereo display according to an embodiment of this disclosure. The flow chart starts with a main signal for the left channel 210a. Based on the main signal 210a, a compensation signal 230a for the right channel is computed. This is done, e.g., as a downscaled version of the left main signal. The compensation signal models the expected crosstalk at the right channel. The same is done for the right channel. Based on the main signal 210b, a crosstalk compensation signal 230b for the left channel is computed. For each channel the crosstalk compensation is mixed with the respective main signal. For the left channel, the main signal 210a is mixed together with the left compensation signal 230b in block 240a. For the right channel, the main signal 210b is mixed together with the right compensation signal 230a in block 240b. The respective signals are then provided to their respective outputs, i.e. the combined left signal is provided to the left channel of the stereo display 250a, and the combined right signal is provided to the right channel of the stereo display 250b.

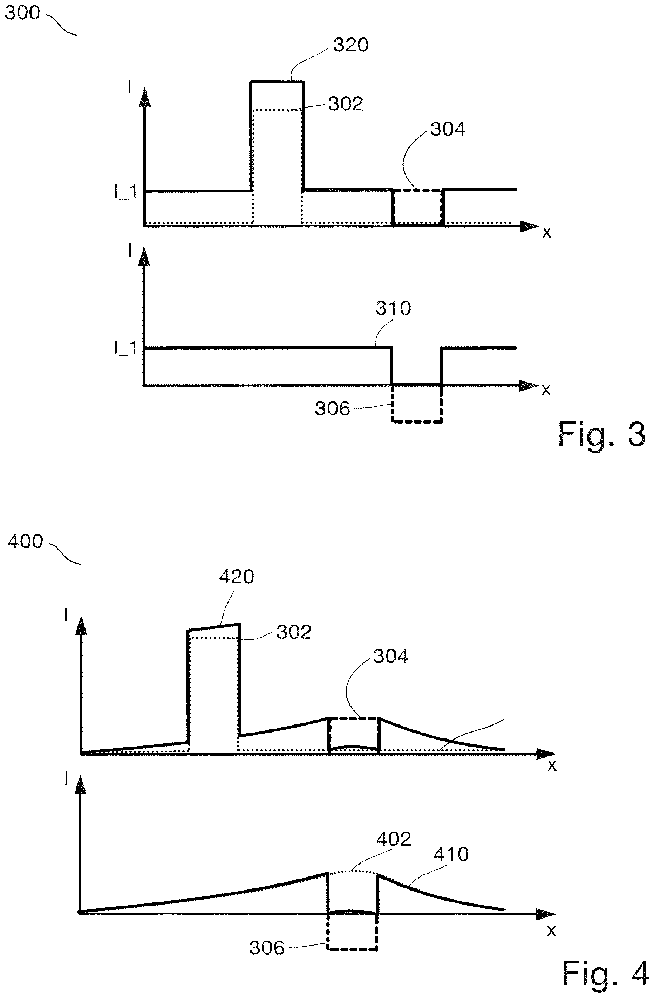

Fig. 3 shows a compensation strategy 300 of device for generating an image for a stereo display according to an embodiment of this disclosure. The upper diagram of the figures shows an image signal's intensity I (y-axis) along a horizontal line (x-axis) of a display. The main signal 302 is shown as a dotted line. It can be a main signal for the left channel of the display ("L-signal") or a main signal for the right channel ("R-signal"). The main signal 302 is disturbed by crosstalk 304 shown as a dashed line. As can be seen, the crosstalk exceeds the main signals intensity at the positions of the crosstalk, where the main signal 302 is nearly zero.

If one would now only add an inverted model 306 of the crosstalk to the main signal 302, the resulting signal would become negative at the location of the crosstalk and therefore impossible to command (as intensity values cannot have negative values). The outcome would be an overall signal in which the crosstalk is not considerably reduced.

To improve the situation, a constant amount I_1 is added to the compensation signal 306 leading to an amended compensation signal 310. Adding the amended compensation signal 310 to the main signal 302 yields the combined channel signal 320 (combined L-channel signal or combined R-channel signal). As can be seen, this signal will compensate the crosstalk 304 nearly completely (the crosstalk 304 seamlessly fills the gap produced by the combined channel signal 320).

Fig. 4 shows a compensation strategy 400 of a device for generating an image for a stereo display according to an embodiment of this disclosure. The initial situation is the same as in Fig. 3. A main signal 302 (dotted line) is disturbed by crosstalk 304 (dashed line). A compensation signal 306 is generated as an inverted version of the crosstalk. However, since at the location of the crosstalk, the main signal 302 is smaller than the crosstalk 304, just adding the inverted signal to the main signal 302 would not help a lot, since negative intensity values cannot be realized by the display.

The strategy of Fig. 3 involved additionally shifting the main signal (or the compensation signal) by a constant amount. This solution has the disadvantage that the image becomes brighter also at locations that are far away from the crosstalk. To improve this, the compensation strategy proposed in Fig. 4 comprises a non-constant amendment of the main signal 302 or of the compensation signal 306. The non-constant amendment is realized by adding a bell-shaped waveform 402 to either the main signal 302 or to the compensation signal 306. The amended compensation signal 410 is depicted by a solid line. By this strategy, parts of the main signal, which are far away from the crosstalk 304 are less raised than parts close to the crosstalk . This can be achieved by any bell-shaped waveform, such as a raised cosine or the like. The waveform is centered with its maximum at the position where the absolute value of the difference between the main signal 302 and the crosstalk 304 is largest. In this way, the crosstalk 304 can be compensated effectively while on the same time parts of the main signal which are distant from the crosstalk 304 are less affected by the compensation, as can be seen by the combined channel signal 420. Because human vision is less sensitive to gradual variations than abrupt edges, a smooth varying floor may be visually preferable to uniformly amended contrast.

The combination of original signal and compensation values can also be nonlinear: $Viewed signal : = F \left(Signal+\left(Floor+Crosstalk\right)\right) + Crosstalk ,$ wherein examples of function F can be F(x, y) = Max(x, y) or F(x, y) = x * (x - y) / (x - Signal_Max) + y.

In 3D displays, e.g. 3D displays that use polarizers to separate signals for the left and right eyes, crosstalk occurs, where part of the signal intended for one eye is detected by the other. This may lead to incorrect color perception and degrades the viewing experience. The objective is to adjust the displayed signals so that the seen signals closely match the intended signals.

The used signals can be defined as follows:

### Intended signals

$\left({R}_{l}^{intended}, {G}_{l}^{intended}, {B}_{l}^{intended}\right)$ and $\left({R}_{r}^{intended}, {G}_{r}^{intended}, {B}_{r}^{intended}\right)$*,*
are the original RGB values intended for the left and right eyes.

### Displayed signals

$\left({R}_{l}^{displayed}, {G}_{l}^{displayed}, {B}_{l}^{displayed}\right)$ and $\left({R}_{r}^{displayed}, {G}_{r}^{displayed}, {B}_{r}^{displayed}\right)$,
are the RGB values displayed on the screen after correction for crosstalk.

### Seen signals

$\left({R}_{l}^{seen}, {G}_{l}^{seen}, {B}_{l}^{seen}\right)$ and $\left({R}_{r}^{seen}, {G}_{r}^{seen}, {B}_{r}^{seen}\right)$,
are the actual RGB signals detected by each eye, including the effect of crosstalk.

### Crosstalk coefficients:

*c_{R}, c_{G}*, *c_{B},*
are the proportions of the red, green, and blue signals from one eye detected by the other due to crosstalk.

The seen signals are related to the displayed signals through the crosstalk coefficients as follows:

### For the left eye:

${R}_{l}^{seen} = {R}_{l}^{displayed} + {c}_{R} ⋅ {R}_{r}^{displayed} ,$ ${G}_{l}^{seen} = {G}_{l}^{displayed} + {c}_{G} ⋅ {G}_{r}^{displayed} ,$ ${B}_{l}^{seen} = {B}_{l}^{displayed} + {c}_{B} ⋅ {B}_{r}^{displayed} .$

### For the right eye:

${R}_{r}^{seen} = {R}_{r}^{displayed} + {c}_{R} ⋅ {R}_{l}^{displayed} ,$ ${G}_{r}^{seen} = {G}_{r}^{displayed} + {c}_{G} ⋅ {G}_{l}^{displayed} ,$ ${B}_{r}^{seen} = {B}_{r}^{displayed} + {c}_{B} ⋅ {B}_{l}^{displayed} .$

A correction objective, the displayed signals should be adjusted such that the seen signals match the intended signals: ${X}_{l}^{seen} = {X}_{l}^{intended} ,$ ${X}_{r}^{seen} = {X}_{r}^{intended} ,$ where X ∈ { R, G, B } .

Substituting the expressions for ${X}_{l}^{seen}$ and ${X}_{r}^{seen}$*,* we obtain a system of linear equations for each channel:
For each color channel X ∈ { R, G, B } , we write: $\left[\begin{matrix}1 & {c}_{X} \\ {c}_{X} & 1\end{matrix}\right] \left[\begin{matrix}{X}_{l}^{displayed} \\ {X}_{r}^{displayed}\end{matrix}\right] = \left[\begin{matrix}{X}_{l}^{intended} \\ {X}_{r}^{intended}\end{matrix}\right] .$

Solution: $\left[\begin{matrix}{X}_{l}^{displayed} \\ {X}_{r}^{displayed}\end{matrix}\right] = \frac{1}{1 - {c}_{X}^{2}} \left[\begin{matrix}1 & - {c}_{X} \\ - {c}_{X} & 1\end{matrix}\right] \left[\begin{matrix}{X}_{l}^{intended} \\ {X}_{r}^{intended}\end{matrix}\right] .$

Here, *c_{X}* is the crosstalk coefficient for the specific color channel.

For a final combined correction, the corrected displayed signals are computed separately for each color channel R, G, and B:

### Red channel:

$\left[\begin{matrix}{R}_{l}^{displayed} \\ {R}_{r}^{displayed}\end{matrix}\right] = \frac{1}{1 - {c}_{R}^{2}} \left[\begin{matrix}1 & - {c}_{R} \\ - {c}_{R} & 1\end{matrix}\right] \left[\begin{matrix}{R}_{l}^{intended} \\ {R}_{r}^{intended}\end{matrix}\right] .$

### Green channel:

$\left[\begin{matrix}{G}_{l}^{displayed} \\ {G}_{r}^{displayed}\end{matrix}\right] = \frac{1}{1 - {c}_{G}^{2}} \left[\begin{matrix}1 & - {c}_{G} \\ - {c}_{G} & 1\end{matrix}\right] \left[\begin{matrix}{G}_{l}^{intended} \\ {G}_{r}^{intended}\end{matrix}\right] .$

### Blue channel:

$\left[\begin{matrix}{B}_{l}^{displayed} \\ {B}_{r}^{displayed}\end{matrix}\right] = \frac{1}{1 - {c}_{B}^{2}} \left[\begin{matrix}1 & - {c}_{B} \\ - {c}_{B} & 1\end{matrix}\right] \left[\begin{matrix}{B}_{l}^{intended} \\ {B}_{r}^{intended}\end{matrix}\right] .$

By applying the above correction formulas to the red, green, and blue channels, the displayed signals can be adjusted to minimize the effect of crosstalk, ensuring that the seen signals closely match the intended signals. This model accounts for different crosstalk coefficients for each color channel, making it flexible and accurate.

Some embodiments relate to a microscope comprising a system as described in connection with one or more of the Figs. 1 to 4. Alternatively, a microscope may be part of or connected to a system as described in connection with one or more of the Figs. 1 to 4.

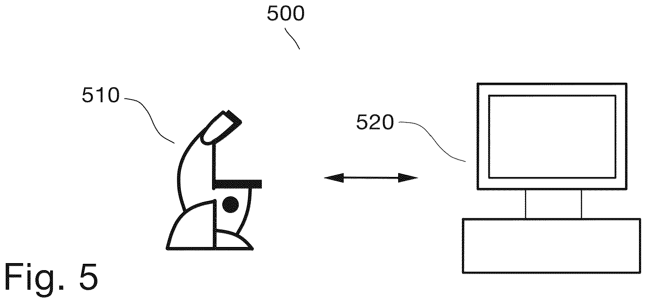

Fig. 5 shows a schematic illustration of a system 500 configured to perform a method described herein. The system 500 comprises a microscope 510 and a computer system 520. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

The computer system 520 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 102: pixel with relatively strong crosstalk
- 110: main channel signal
- 120: crosstalk
- 130: model of crosstalk
- 200: flow chart of two channel compensation
- 210a: left main signal
- 210b: right main signal
- 230a: right channel compensation signal
- 230b: left compensation signal
- 240a: combined signals
- 240b: combined signals
- 250a: stereo display left channel
- 250b: stereo display right channel
- 300: compensation strategy with constant intensity shift
- 302: main signal
- 304: crosstalk
- 306: inverted model of crosstalk
- 310: amended compensation signal
- 320: combined channel signal
- 400: compensation strategy with constant intensity shift
- 402: bell shaped waveform
- 410: amended compensation signal
- 420: combined channel signal

## Claims

1. A device for generating an image for a stereo display, in particular for a surgical microscope,
configured to:
- obtain of a sample a plurality of stereo images from an image acquisition device, wherein a stereo image comprises a left image and a right image as stereo information; and
- determine a signal, L-signal, (110) for a left image channel, L-channel, of a stereo display;
- determine a signal, R-signal, for a right image channel, R-channel, of the stereo display;
- determine a compensation signal, L-compensation, (130) for the L-channel of the stereo display based on the R-signal;
- determine a compensation signal, R-compensation, for the R-channel of the stereo display based on the L-signal;
- provide the L-signal, the L-compensation, the R-signal, and the R-compensation for display on the stereo display.

2. The device according to the preceding claim,
configured to:
- add the L-signal and the L-compensation to a combined L-channel-signal (220);
- add the R-signal and the R-compensation to a combined R-channel-signal; and
wherein the L-signal and the L-compensation are provided as the combined L-channel-signal for display on the stereo display; and
wherein the R-signal, and the R-compensation are provided as the combined R-channel-signal for display on the stereo display.

3. The device according to one of the preceding claims,
wherein the L-compensation is determined as a negative expected crosstalk of the R-signal;
and/or
wherein the R-compensation is determined as a negative expected crosstalk of the L-signal.

4. The device according to one of the preceding claims,
wherein the L-compensation is based on a linear scaling of the R-signal; and/or
wherein the R-compensation is based on a linear scaling of the L-signal.

5. The device according to one of the preceding claims,
wherein the L-signal, the L-compensation, the R-signal, and the R-compensation comprise several channels that depend on the number of channels of a color model, in particular the RGB-color-model.

6. The device according to one of the preceding claims,
configured to:
- determine if the L-signal has one or more elements that are smaller than respective elements of an estimated crosstalk for the L-channel;
- if confirmed, add to all elements of the L-signal or of the L-compensation a first constant amount (I_1);
and/or
- determine if the R-signal has one or more elements that are smaller than respective elements of an estimated crosstalk for the R-channel;
- if confirmed, add to all elements of the R-signal or of the R-compensation a second constant amount.

7. The device according to the preceding claim,
wherein the first constant amount equals or exceeds the amount of the largest negative difference between the L-signal and the estimated crosstalk for the L-channel; and/or
wherein the second constant amount equals or exceeds the amount of the largest negative difference between the R-signal and the estimated crosstalk for the R-channel.

8. The device according to one of the two preceding claims,
wherein the first constant amount equals the largest amount of an estimated crosstalk for the L-channel; and/or
wherein the second constant amount equals the largest amount of an estimated crosstalk for the R-channel;

9. The device according to one of the preceding claims,
configured to:
- determine if the L-signal has one or more elements that are smaller than respective elements of an estimated crosstalk for the L-channel;
- if confirmed, add a first non-constant amount (402) to the L-signal of to the L-compensation such that the amount is increasing the closer the L-signal elements are to the elements where the crosstalk is larger than the L-signal elements;
and/or
- determine if the L-signal has one or more elements that are smaller than respective elements of an estimated crosstalk for the L-channel;
- if confirmed, add a second non-constant amount to the R-signal or to the R-compensation such that the amount is increasing the closer the R-signal elements are to the elements where the crosstalk is larger than the L-signal elements.

10. The device according to the preceding claim,
wherein the first non-constant amount resembles an essentially smooth function (402) that has a maximum value at the element with the largest negative difference between the L-signal and the expected crosstalk; and/or
wherein the second non-constant amount resembles an essentially smooth function that has a maximum value at the element with the largest negative difference between the R-signal and the expected crosstalk.

11. The device according to one of the preceding claims,
configured to:
- obtain a viewing position of a user;
- determine based on the obtained viewing position one or more of:
-- the L-signal,
-- the R-signal,
-- the L-compensation,
-- the R-compensation.

12. The device according to one of the preceding claims,
wherein the signals and the compensations are related to a horizontal line for a pre-defined vertical position of the polarized display; and
configured to:
- determine based on the vertical position one or both of:
-- the L-compensation,
-- the R-compensation.

13. A method for generating an image for a stereo display, in particular for a surgical microscope,
comprising the steps:
- obtaining of a sample a plurality of stereo images from a stereo imaging system, wherein a stereo image comprises a left image and a right image as stereo information; and
- determining a signal, L-signal, for a left image channel, L-channel, of a stereo display;
- determining a signal, R-signal, for a right image channel, R-channel, of the stereo display;
- determining a compensation signal, L-compensation, for the L-channel of the stereo display based on the R-signal;
- determining a compensation signal, R-compensation, for the R-channel of the stereo display based on the L-signal;
- providing the L-signal, the L-compensation, the R-signal, and the R-compensation for display on the stereo display.

14. Computer program with a program code
for performing the method according to the preceding claim when the computer program is run on a processor.
